# FASCICULE DE BREVET EUROPEEN

(11) **EP 2 886 523 B1**
(45) Date de publication et mention de la délivrance du brevet: **03.10.2018**
(21) Numéro de dépôt: 14196748.9
(22) Date de dépôt: 08.12.2014
(51) Int. Cl.: C04B 26/04, C04B 26/06, C04B 26/16, C09D 5/34, C09D 5/02, C04B 111/40, C04B 111/28, C08K 7/22, C08K 5/05

(54) **COMPOSITION D'ENDUIT POUR MUR ET PLAFOND AYANT DES PROPRIÉTÉS D'ISOLATION THERMIQUE**
ZUSAMMENSETZUNG FÜR MAUER- UND DECKENPUTZ MIT WÄRMEDÄMMENDEN EIGENSCHAFTEN
WALL AND CEILING COATING COMPOSITION HAVING HEAT INSULATION PROPERTIES

(30) Priorité: 19.12.2013 FR 1362984
(43) Date de publication de la demande: 24.06.2015
(73) Titulaire: BOSTIK SA, 93210 La Plaine Saint Denis (FR)
(72) Inventeur: Casimiro, Jessie, 77170 Brie Comte Robert (FR); Verscheure, Eric, 77670 Vernou la Celle sur Seine (FR)
(74) Mandataire: Chahine, Audrey Claire

(56) Documents cités:
- EP-A1- 2 289 862
- WO-A2-01/77242
- DE-A1-102005 040 091
- US-A1- 2005 271 882

## Description

Dans le domaine de la construction et du bâtiment, l'isolation thermique désigne l'ensemble des techniques mises en oeuvre pour limiter les transferts calorifiques entre le milieu intérieur et l'environnement extérieur se trouvant à une température différente. Il peut s'agir de limiter les déperditions de chaleur de l'intérieur vers l'extérieur ou en sens inverse limiter la diffusion de la chaleur de l'extérieur vers l'intérieur. Dans le domaine de l'habitat, ces transferts thermiques peuvent se faire au travers de différentes parois séparant l'espace habitable de son environnement extérieur: combles et toiture, murs, plafonds, vitres et fenêtres, sols. Pour pallier ces fuites calorifiques, il existe des solutions adaptées à chacune des situations sus-citées.

Les murs et plafonds représentent des surfaces importantes à travers lesquelles vont se faire des échanges de flux thermique. En isolant thermiquement ces parties du bâtiment, on peut ainsi améliorer de manière importante les performances thermiques du bâtiment et réduire les coûts énergétiques de surchauffage ou surclimatisation associés à une mauvaise isolation.

Il existe trois grandes familles connues de procédés d'isolation thermique des murs et/ou plafonds:
- l'isolation thermique dans l'épaisseur du mur, par incorporation d'éléments isolants à l'intérieur du mur (panneaux ou blocs isolants, blocs coffrants, mousse isolante) généralement au moment de sa construction ;
- l'isolation thermique par l'intérieur, c'est-à-dire l'isolation de la surface intérieure du mur, et
- l'isolation thermique par l'extérieur, c'est-à-dire l'isolation de la façade extérieure du mur, qui est exposée directement aux conditions climatiques (soleil, vent, intempéries) ; ces deux dernières techniques pouvant être réalisées sur un mur existant, contrairement à la première technique mentionnée.
A chacun de ses procédés correspondent des moyens d'isolation thermique adaptés rarement interchangeables. En particulier, lorsque l'on souhaite isoler thermiquement un mur existant, les dispositifs isolants convenant pour l'isolation intérieure ne conviennent généralement pas pour l'isolation extérieure, laquelle doit résister aux agents atmosphériques extérieurs. De même, des dispositifs isolants convenant pour l'isolation extérieure ne conviendront généralement pas pour l'isolation intérieure, car ils sont volumineux ou épais (5 à 8 centimètres) et présentent un aspect rugueux nécessitant une étape de replanéité.

Dans le cadre de la présente demande, on s'est intéressé à l'isolation thermique des murs et plafonds, à l'intérieur d'un espace de construction ou d'habitation. L'isolation thermique par l'intérieur présente l'avantage de ne pas modifier l'aspect extérieur de l'espace à isoler, contrairement à l'isolation thermique par l'extérieur. Les travaux peuvent être entrepris sans autorisation administrative particulière.

La plupart des solutions existantes à ce jour pour assurer l'isolation thermique d'un mur ou plafond par l'intérieur consiste à assembler contre celui-ci des panneaux isolants, cloisons de doublage ou faux-plafond (à base de polystyrène expansé, laine de verre, laine de roche, etc) ou accoler une contre-cloison contre la surface à isoler en ménageant une lame d'air ou une surface interstitielle remplie d'un autre isolant. Cependant, ces systèmes isolants sont relativement épais et réduisent de manière importante le volume et la surface de l'espace habitable. De plus, la mise en place de ces cloisons est complexe et les utilisateurs sont souvent réticents à entreprendre eux-même ces travaux lourds qui impliquent notamment le découpage des matériaux isolants sur-mesure, la préparation des murs qui doivent de plus être exempts d'humidité, et la pose de joints entre les matériaux isolants. Lorsque ces cloisons sont mal posées, assemblées, fixées ou dimensionnées, des interstices entre les cloisons peuvent apparaitre et générer des fuites énergétiques plus ou moins importantes voire même des infiltrations d'eau dues à la condensation de l'humidité de l'air derrière les cloisons isolantes. Cela peut à terme favoriser l'apparition de champignons et de moisissures dans certains cas.

Par ailleurs, lorsqu'on souhaite remplacer ou améliorer l'isolation thermique d'un mur doublé d'une cloison isolante sans perte d'espace substantielle, il est nécessaire d'arracher le doublage existant, réparer le cas échéant le mur support, et poser un nouveau système d'isolation qui sera plus performant, pour une épaisseur équivalente.

De ce fait, tous ces travaux de pose d'isolant et de rénovation/restauration sont complexes et ne sont pas à la portée de n'importe quel utilisateur. Au contraire, il est recommandé de faire appel à des professionnels du domaine concerné pour éviter la création de ponts thermiques, c'est-à-dire des zones ponctuelles ou linéaires où la barrière isolante est interrompue.

Dans la demande de brevet EP 0 281 476, il est connu d'utiliser des compositions d'enduit liquide ou pâteuse du type bi-composant (aussi appelé enduit de ragréage), obtenues par mélange au moment de l'emploi d'un composant solide et d'un composant liquide dans un rapport pondéral liquide sur solide allant de 0,8 à 1, pour isoler thermiquement et phoniquement un mur par l'intérieur ou par l'extérieur. Le composant solide comprend de 20 à 60% en poids d'un liant hydraulique choisi dans le groupe constitué par le plâtre, le ciment et la bentonite calcique gonflante, de 10 à 40% en poids d'un produit choisi dans le groupe constitué par les sciures de bois et les scories métallurgiques broyées, et de 2 à 10% en poids de mica naturel micronisé. Le composant liquide comprend en dispersion dans l'eau une résine d'un copolymère acrylique à pH basique en une quantité représentant de 30 à 50% en poids du composant, et un plastifiant. Après mélange du composant solide et du composant liquide dans un rapport pondéral particulier, la composition résultant dudit mélange est projetée sur la surface à isoler à l'aide d'une machine à projeter.

Bien que la mise en oeuvre de ces compositions semble plus simple à réaliser par rapport à celle des systèmes d'isolation thermiques solides conventionnels sus-décrits, elle présente encore de nombreux inconvénients. En effet, ces compositions ne peuvent être stockées sous la forme de compositions prête-à-l'emploi car elles prennent en masse et durcissent rapidement après mélange des composants liquide et solide (en moins de 3 heures environ). La mise en oeuvre de ce type d'enduit nécessite donc de réaliser au moins deux étapes : l'une consistant à préparer la composition et l'autre consistant à appliquer l'enduit. En outre, la mise en oeuvre de ces compositions présente l'inconvénient de devoir disposer d'une machine à projeter et d'outils particuliers pour peser, mélanger les composants solide et liquide, et appliquer la composition obtenue. Cela peut être particulièrement difficile lorsque des volumes importants de produits sont mis en jeu. De plus, l'utilisateur n'est pas à l'abri d'erreurs de pesée ou mélange lors de la préparation de la composition, qui peuvent conduire à un mélange hétérogène ou une prise en masse prématurée du mélange, et donc une application non homogène de la composition sur le support générant à des ponts thermiques. Le revêtement obtenu après durcissement de la couche d'enduit sur le support reste de plus relativement épais (environ 5 cm) et présente un aspect rugueux de crépi, à la fois inesthétique et inapproprié pour l'application superficielle d'un revêtement mural décoratif de finition, en particulier un revêtement mural décoratif mince et/ou fragile tel que du papier peint. Ce dernier risque en effet de ne pas ou peu adhérer à la surface brute de l'enduit durci et se décoller rapidement ou de se déchirer au contact des picots et aspérités de la surface de l'enduit. Le revêtement isolant ainsi obtenu est donc peu pratique pour être utilisé comme sous-couche de finition.

On connait également de la demande US 2005/0126441 des compositions de peinture ayant des propriétés d'isolation thermique, utilisées seules ou en combinaison avec une couche primaire permettant l'accroche de la composition de peinture sur la surface à revêtir. Ces compositions de peinture comportent des pigments réflecteurs de rayons infrarouge et/ou des microsphères creuses de verre.

Toutefois, ces compositions conduisent à des revêtements ayant une épaisseur insuffisante (au plus 300 µm) pour permettre une bonne isolation des murs. En effet, ces revêtements sont peu ou pas performants dès lors qu'ils sont appliqués comme revêtement intérieur ou utilisés comme sous-couche d'un matériau non isolant. En outre, lorsque le mur ou le plafond à isoler est abîmé, par exemple par la présence de trous ou fissures pouvant aller jusqu'à 3 mm voire 1 cm de profondeur, ces compositions ne permettent pas de recouvrir de manière continue la surface abîmée du mur ou plafond, laissant ces défauts apparents. Le résultat obtenu est donc peu satisfaisant esthétiquement et ne permet pas d'assurer une isolation thermique continue sur l'ensemble de la surface du mur ou plafond. Par ailleurs, ces compositions risquent de s'écailler ou de se fissurer, et donc de créer des ponts thermiques nuisant encore aux performances thermiques du revêtement isolant. Des boursouflures venant fragiliser l'isolation, peuvent également apparaître au cours du temps à la surface du revêtement, en présence d'humidité dans la maçonnerie, traduisant une mauvaise adhésion du revêtement sur la surface support.

Dans le document DE 10 2005 040 091 A1 il est connu d'utiliser des compositions d'enduit sous forme pâteuse prêtes-à-l'emploi et stables au stockage comprenant des charges légères, des charges minérales et un liant polymérique.

Ainsi, ces systèmes d'isolation thermique existants ne donnent pas entière satisfaction et il existe un besoin de disposer d'un système d'isolation thermique permettant de remédier en tout ou partie aux inconvénients de l'art antérieur.

En particulier, il existe un besoin de mettre à disposition un système d'isolation thermique, facile et rapide à mettre en oeuvre sur la surface intérieure d'un mur ou plafond, et peu encombrant par rapport aux systèmes existants.

En particulier, il existe un besoin de formuler un système d'isolation thermique pour mur et plafond d'intérieur, qui peut être appliqué de manière homogène sur une surface à isoler, et présente un aspect esthétiquement acceptable et adapté pour y superposer un revêtement mural décoratif de finition, et en particulier un revêtement mural décoratif mince et/ou fragile tel que du papier peint.

En particulier, il existe un besoin de trouver un système d'isolation thermique permettant d'isoler efficacement aussi bien des surfaces neuves que faiblement ou moyennement abîmées.

Afin de répondre à ces besoins, et en particulier, afin de mettre à la portée de tout utilisateur, même peu expérimenté, la pose et l'amélioration d'un système d'isolation thermique par l'intérieur, sans perte substantielle d'espace, il a été désormais mis au point un système d'isolation thermique mural, fluide (liquide ou pâteux) tel que défini ci-après.

Ainsi, un premier objet de l'invention concerne une composition d'enduit comprenant :
- de 4 à 17% en poids de microsphères creuses (notées a)) ayant une conductivité thermique (notée lambda) inférieure à 0,1 W.m⁻¹.K⁻¹,
- de 0,05 à 1% en poids d'au moins un alcool linéaire (noté b)) dont la chaine hydrocarbonée comporte au moins 8 atomes de carbone,
- de 5 à 25% en poids d'au moins un agent d'adhérence (noté c)) choisi parmi les polymères dispersibles ou solubles dans l'eau, présentant une température de transition vitreuse (Tg) inférieure ou égale à 65°C,
- de 25 à 50% en poids d'un liant non hydraulique (noté d)) choisi parmi les charges minérales et métalliques suivantes : carbonate d'un métal alcalino-terreux, alumine, silice, silicate d'un métal choisi parmi l'aluminium, les métaux alcalins et les métaux alcalino-terreux, et leur mélange, lesdites charges présentant une taille moyenne de particule allant de 5 à 100 µm,
- de 0,1 à 1 % en poids d'au moins un agent épaississant (noté e)),
- de l'eau (noté f)),
les pourcentages en poids étant exprimés en % en poids de matière sèche par rapport au poids total de la composition d'enduit.

Contrairement, aux systèmes d'isolation thermiques existants, la composition d'enduit selon l'invention est facile et rapide à mettre en oeuvre, même pour un utilisateur peu expérimenté. En particulier, la composition d'enduit selon l'invention peut être appliquée de manière homogène au rouleau, sans couler, et sèche rapidement.

La composition d'enduit selon l'invention est une composition prête-à-l'emploi. Elle ne nécessite pas de préparation particulière avant emploi, et est suffisamment stable au stockage, pour ne pas être pour être formulée sous la forme de composition bi-composant ou de pré-mélange.

A la différence des compositions bicomposant qui prennent en masse lors du contact de la phase solide avec la phase liquide, la composition d'enduit selon l'invention est une composition monocomposant qui durcit par évaporation de l'eau contenue dans la composition. Une fois durcie et séchée, la composition selon l'invention permet de former un matériau rigide, et notamment un revêtement, possédant des propriétés d'isolation thermique adaptées pour assurer une bonne isolation des murs et plafond par l'intérieur.

Le revêtement ainsi obtenu présente une épaisseur acceptable au vu des performances d'isolation thermiques et de l'encombrement minimum désirés. En particulier, le revêtement présente avantageusement une conductivité thermique inférieure à 0,07 W.m⁻¹.K⁻¹ (Watt par mètre par kelvin), de préférence inférieure à 0,065 W.m⁻¹.K⁻¹ et une épaisseur allant de 0,5 à 5 millimètres, de préférence allant de 0,5 à 3 millimètres.

Avantageusement, la composition d'enduit selon l'invention peut être appliquée avec une épaisseur allant jusque trois millimètres sans problème d'adhérence au support ou de fissuration, une fois séchée. Il a été trouvé en particulier, que l'utilisation de 0,05 à 1% en poids d'un alcool gras (dont la chaine hydrocarbonée comporte au moins 8 atomes de carbone) dans la composition d'enduit selon l'invention, permettait d'obtenir un revêtement sans fissures.

Par ailleurs, la composition d'enduit selon l'invention peut être utilisée comme enduit de lissage pour assurer la planéité d'une surface d'un support présentant des petits défauts (aspérités et/ou trous et fissures pouvant aller jusqu'à 1 cm de profondeur et préférentiellement jusqu'à 3 mm de profondeur). En particulier, elle permet de lisser les murs et les plafonds et donc de les restaurer et/ou de les préparer à la pose d'un revêtement mural décoratif superficiel tel que du papier peint, tapisserie, peinture, vernis.

Le revêtement ainsi obtenu présente une surface uniforme et plane par rapport au plan de surface dudit support et peut être recouvert d'un revêtement mural décoratif mince et/ou fragile tel que du papier peint.

En particulier, le revêtement obtenu permet de réduire ou faire disparaitre la sensation de mur froid lorsqu'on touche le mur, qui est associée généralement à une isolation thermique insuffisante du mur.

De plus, le revêtement isolant selon l'invention, peut être recouvert d'un revêtement mural décoratif superficiel sans perte ou diminution notable de ses propriétés isolantes.

D'autres objets et caractéristiques ou avantages de la présente invention apparaitront plus clairement à la lecture de la description et des exemples.

Dans la présente demande, en l'absence d'indication contraire :
- les quantités exprimées sous la forme de pourcentage correspondent à des pourcentages poids/poids. En particulier, les quantités relatives aux ingrédients notés a), b), c) d) et e) tel que décrit ci-dessus et aux additifs éventuellement présents dans la composition selon l'invention sont exprimées en pourcentage en poids de matière sèche par rapport au poids total de la composition d'enduit selon l'invention ;
- la conductivité thermique est mesurée à 20°C, à pression atmosphérique et à 50% d'humidité relative. La conductivité thermique peut être mesurée à l'aide d'un conductivimètre.
- la taille moyenne de particule (microsphère creuse ou charge) est mesurée pour une distribution granulométrique en volume et correspondant à 50% en volume de l'échantillon de particules analysé. Lorsque les particules sont sphériques, la taille moyenne de particule correspond au diamètre médian (D50 ou Dv50) qui correspond au diamètre tel que 50% des particules en volume ont une taille inférieure audit diamètre. Dans la présente demande, cette valeur est exprimée en micromètres et déterminée selon la Norme NF ISO 13320-1 (1999) par diffraction laser sur un appareil de type MALVERN.
- par sphère ou sphérique, on entend caractériser les particules (microsphère creuse ou charge) présentant un rapport de forme proche de 1, allant de 0,5 à 1,5 par exemple, tel que des particules de forme oblongue, ovoïde, ellipsoïdales, et de préférence égale à 1 c'est-à-dire ayant une forme sphérique. Un tel rapport de forme est défini comme le rapport entre la distance maximale entre deux points de la surface de la particule, suivant une direction principale, sur la distance minimale entre deux points de la surface de la particule, suivant une direction sensiblement perpendiculaire à la direction principale.

La composition d'enduit selon l'invention comprend de 4 à 17% en poids de microsphères creuses ayant une conductivité thermique inférieure à 0,1 W.m⁻¹.K⁻¹, de préférence allant de 0,01 à 0,065 W.m⁻¹.K⁻¹. En dessous de cette gamme de concentration, l'enduit obtenu présente des propriétés d'isolation thermique insuffisantes (c'est-à-dire une valeur de lambda supérieure à 0,1 W/(m.K)). Au-dessus d'une telle gamme de concentration, la composition est difficile à mélanger et ne peut être appliquée au rouleau.

De préférence, la composition d'enduit selon l'invention comprend de 7 % à 17% en poids de microsphères creuses.

Les microsphères creuses utilisées selon l'invention, peuvent être choisies parmi n'importe quelles microsphères creuses constituées de verre ou polymère, et possédant une conductivité thermique inférieure à 0,1 W.m⁻¹.K⁻¹, de préférence allant de 0,01 à 0,065 W.m⁻¹.K⁻¹.

La conductivité thermique des microsphères creuses utilisées selon l'invention peut être mesurée de manière habituelle, à 21°C sous 1 bar, notamment selon la norme EN NF 12664.

Les microsphères creuses utilisées selon l'invention ont de préférence une densité réelle allant de 0,05 à 0,5 g/cm³, de préférence de 0,1 à 0,3 g/cm³.

La densité réelle des microsphères creuses peut être mesurée de manière conventionnelle, par exemple à l'aide d'un pycnomètre à air.

En particulier, les microsphères creuses utilisées selon l'invention sont de préférence dispersibles dans l'eau.

Avantageusement, les microsphères creuses utilisées selon l'invention sont non poreuses. Cela se traduit par le fait qu'elles n'absorbent pas les liquides, tels que l'eau présente dans la composition d'enduit selon l'invention.

Les microsphères creuses utilisées selon l'invention comprennent de préférence un gaz inerte ou un mélange de gaz inerte tel que de l'air, à une pression de gaz allant de 0,3x10⁵ à 7x10⁵ Pa à 23°C, le(s)dit(s) gaz présentant une conductivité thermique inférieure ou égale à celle de l'air. Ce(s) gaz qui est (ou sont) généralement piégé(s) lors du procédé de fabrication des microsphères creuses, est (ou sont) donc au moins aussi isolant thermiquement que l'air. De préférence, les microphères creuses utilisées selon l'invention peuvent comprendre un mélange de dioxyde de soufre et de dioxygène dans un rapport molaire 2:1.

Selon un mode de réalisation préféré selon l'invention, les microsphères creuses utilisées selon l'invention possèdent de préférence une cavité interne unique. Dans ce cas, on parle de microsphères creuses monocellulaires par opposition aux microsphères creuses polycellulaires telles que la perlite.

Selon ce mode de réalisation préféré selon l'invention, les microsphères creuses comprennent dans leur cavité interne un gaz ou mélange de gaz inerte tel que mentionné ci-dessus, notamment un mélange de dioxyde de soufre et de dioxygène dans un rapport molaire 2:1.

Selon ce mode de réalisation préféré selon l'invention, les microsphères creuses utilisées selon l'invention présentent de préférence une paroi externe, délimitant l'intérieur de la cavité interne et la surface externe de la microsphère, d'épaisseur sensiblement homogène et suffisante pour résister aux chocs liés à la manipulation de ces composés lors de la préparation de la composition selon l'invention, et assurer l'étanchéité au gaz contenu dans la microsphère.

Parmi les microsphères creuses utilisables selon l'invention, on préfère utiliser celles ayant une taille moyenne de particule (D50) allant de 0,10 à 100 µm, et plus préférentiellement allant de 25 à 70 µm.

A titre d'exemple de microsphères creuses de verre utilisables, on peut citer :
- celles en borosilicate de sodium et de calcium, de telles microsphères peuvent être en verre flotté et peuvent avoir subi un traitement en surface à base d'époxysilane ou de méthacrylate de chlorure de chrome. De tels composés comprennent majoritairement de la silice, de l'oxyde de bore, des sels de sodium et de calcium introduits en général à la fabrication sous forme de CaO et Na₂O ;
- celles en aluminosilicate. De tels composés comprennent majoritairement de la silice et de l'oxyde d'aluminium (alumine Al₂O₃).

On préfère utiliser des microsphères creuses en borosilicate de sodium et de calcium.

De telles microsphères creuses en verre sont vendues sous la série SCOTCHLITE®K et S par la société Kremer ou sous la dénomination Glass Bubble (de la série S et K ou de la série des produits en verre flotté) par la société 3M.

A titre d'exemple de microsphères creuses de polymère utilisables, on peut citer celles à base de polymère thermoplastique, tel que les microsphères chlorure de vinylidène/acrylonitrile. Ces dernières sont vendues par exemple sous la dénomination « Expancel® » par la société Akzo Nobel.

De préférence, les microsphères creuses en polymère ne sont pas expansibles dans les conditions de pression et température de leur utilisation, par exemple à 1 bar pour des températures allant de -30°C à 50°C.

Parmi toutes ces microsphères creuses de verre ou polymère utilisables, on préfère utiliser :
- celles en borosilicate de sodium et de calcium,
- celles en aluminosilicate,
- celles en chlorure de vinylidène/acrylonitrile.

Parmi toutes ces microsphères creuses de verre ou polymère utilisables, on préfère utiliser plus particulièrement celles en verre et notamment en verre, monocellulaire, non poreuses, choisie parmi:
- celles en verre sodocalcique borosilicaté, de conductivité thermique égale à 0,076 W/(m.K), de densité réelle allant de 0,19 à 0,25 g/cm³ et de diamètre médian D50 de 29 µm, telle que commercialisée sous le nom « Scotchlite® S22 » par la société 3M ;
- celles en verre sodocalcique borosilicaté, de conductivité thermique égale à 0,046 W/(m.K), de densité réelle allant de 0,1 à 0,14 g/cm³ et de diamètre médian D50 de 46 µm, telle que commercialisée sous le nom « Scotchlite® K1 » par la société 3M ;
- celles en chlorure de vinylidène/acrylonitrile, de conductivité thermique égale à 0,049W/(m.K), de la série « Expancel® » par exemple.

Les microsphères creuses utilisées selon l'invention peuvent être préparées par des procédés de fabrication bien connus.

Les microsphères creuses de verre peuvent notamment être préparées par un procédé tel que décrit dans la demande WO 2011/084407, permettant de contrôler la taille, la forme, la densité et la résistance des microsphères creuses de verre. Dans ce procédé de fabrication, une composition de verre est fondue puis broyée pour obtenir une mouture de particules de taille adaptée à l'obtention de microsphères creuses de taille souhaitée. La mouture en verre est ensuite chauffée sous vide au contact d'une flamme à une température supérieure au point de ramollissement de la composition de verre, généralement supérieure à 1300°C, pour former des microsphères creuses de verre. Les microsphères creuses peuvent être obtenues en mettant en oeuvre un agent de soufflage tel que du soufre ou du dioxyde de soufre, introduit dans la mouture de verre avant contact de celle-ci avec la flamme. Elles peuvent également être obtenues sans agent de gonflement en mettant en oeuvre le procédé sus-décrit à une pression préférentiellement inférieure à 6,773 Pa. La quantité d'agent de gonflement utilisée, la température de flamme et la durée de chauffage de la mouture peuvent être ajustées afin d'obtenir des microsphères creuses de verre de densité désirée.

Les microsphères creuses de polymère peuvent notamment être préparées par un procédé tel que décrit dans la demande US 3,615,972, dans lequel les microsphères creuses sont formées en polymérisant sous catalyse une microdispersion aqueuse de polymère présentant des gouttelettes de polymère de taille homogène comprenant un agent de soufflage. La taille des gouttelettes de polymère peut être ajustée en faisant varier la vitesse d'agitation du mélange, et peut être stabilisée à l'aide de tensioactif(s) et/ou d'épaississant(s) empêchant la coalescence des gouttelettes. Une fois polymérisées les microsphères obtenues sont filtrées et séchées et peuvent subir une étape d'expansion permettant d'augmenter la taille des microsphères et réduire leur épaisseur de paroi. Lors de cette étape, les microsphères sont chauffées à une température supérieure au point de ramollissement du polymère afin de provoquer l'expansion de la cavité interne de la microsphère jusqu'à atteindre leur dimension finale par évaporation de l'agent de soufflage. Le gaz de soufflage diffuse ensuite à travers la coque polymérique et est remplacé par de l'air. Les microsphères creuses peuvent être également non expansées lorsque le polymère choisi pour les préparer est réticulé ou présente un poids moléculaire élevé.

La composition d'enduit selon l'invention comprend de 0,05 à 1% en poids, de préférence de 0,1 à 1% en poids, d'au moins un alcool dont la chaîne hydrocarbonée comporte au moins 8 atomes de carbone, et de préférence de 8 à 30 atomes de carbone.

Le ou les alcools utilisés dans la composition selon l'invention peu(ven)t être choisi(s) parmi les mono ou polyols, comprenant une chaine hydrocarbonée linéaire.

De préférence, l'alcool utilisé selon l'invention est choisi parmi :
- les alcools gras linéaires répondant à la formule ROH, où R est une chaine hydrocarbonée linéaire, saturée ou insaturée, ayant de 8 à 30 atomes de carbone. Ces alcools, pris en combinaison avec les autres ingrédients de la composition de l'invention, permettent d'obtenir un enduit qui ne fissure pas. Parmi les produits commerciaux disponibles utilisables, on peut citer par exemple le produit « Loxanol® 842 DP/3 » vendu par la société BASF et correspondant à une dispersion aqueuse d'alcool gras linéaire à 30% en poids de matière sèche ;
- les alcools polymériques comprenant une chaine hydrocarbonée linéaire, tel que les polyalcools vinyliques, ayant une Tg allant de 75 à 95°C. Ces alcools, pris en association avec les autres ingrédients de la composition de l'invention, permettent d'apporter à l'enduit une dureté satisfaisante. Parmi les produits commerciaux disponibles utilisables, on peut citer par exemple le produit « Solvitose® 17S » vendu par la société AVEBE, qui correspond à un alcool polyvinylique partiellement hydrolysé ayant une Tg d'environ 85°C sous forme de poudre ;
- et leur mélange.

Plus préférentiellement, on utilise un mélange d'alcool(s) gras linéaire(s) de formule ROH, où R est une chaine hydrocarbonée linéaire, saturée ou insaturée, ayant de 8 à 30 atomes de carbone et de polyalcool(s) vinylique(s), ayant une Tg allant de 75 à 95°C.

La composition d'enduit selon l'invention comprend de 5 à 25% en poids, et de préférence de 10 à 20% en poids, d'au moins un agent d'adhérence choisi parmi les polymères dispersibles ou solubles dans l'eau, présentant une température de transition vitreuse inférieure ou égale à 65°C, et de préférence allant de 5°C à 65°C.

Lorsque la température de transition vitreuse du polymère va de 5 à 65°C, l'enduit obtenu après séchage de la composition présente une dureté satisfaisante. En particulier, l'enduit ne se déforme pas après séchage.

Pour des valeurs de Tg au-delà de 65°C, l'enduit ne présente plus une adhérence suffisante par rapport au support.

A titre d'exemple d'agents d'adhérence utilisables, on peut citer les copolymères de styrène et d'acide (méth)acrylique, les copolymères de styrène et d'ester d'acide (méth)acrylique, les copolymères de styrène et de (méth)acrylamide, lesdits copolymères pouvant être silanisés, les homopolymères et copolymères du butadiène tel que le polybutadiène et polybutadiène-styrène, les polymères vinyliques tel que polychlorure de vinyl et polyvinylacétate, les polyuréthanes, et leur mélange.

En particulier, les monomères d'acide (méth)acrylique ou d'ester d'acide (méth)acrylique utilisables pour préparer ces agents d'adhérence peuvent être choisis parmi :
- l'acide acrylique, l'acide méthacrylique,
- le (méth)acrylate d'alkyle dont la partie alkyle, linéaire ou ramifiée, cyclique ou acyclique, comporte de 1 à 18 atomes de carbone,
- le (méth)acrylate d'allyle,
- le (méth)acrylate d'alkyl éther (ou alkyloxyalkyl), dont chacune des parties alkyle, pouvant être identiques ou différentes, est linéaire ou ramifiée, et comporte de 1 à 18 atomes de carbone,
- le (méth)acrylate d'alkyl aryle éther (ou (méth)acrylate d'aryloxyalkyl), dont la partie alkyle, linéaire ou ramifiée, comporte de 1 à 18 atomes de carbone, et la partie aryle est un groupe phényle,
- le (méth)acrylate d'hydroxyalkyl dont la partie alkyle, linéaire ou ramifiée, comporte de 1 à 18 atomes de carbone, et est éventuellement interrompue par des fonctions ester -C(=O)-O-,
- le (méth)acrylate de polypropylène glycol ou de polyéthylène glycol.

Plus précisément, les monomères d'acide (méth)acrylique ou d'ester d'acide (méth)acrylique peuvent être choisis parmi l'acrylate de méthyle, le méthacrylate de méthyle, l'acrylate d'éthyle, le méthacrylate d'éthyle, l'acrylate de butyle, le méthacrylate de butyle, l'acrylate d'isobutyle, le méthacrylate d'isobutyle, l'acrylate de n-hexyle, le méthacrylate de n-hexyle, l'acrylate d'éthylhexyle, le méthacylate d'éthylhexyle, l'acrylate de n-heptyle, le méthacrylate de n-heptyle, l'acrylate de stéaryle, le méthacrylate de stéaryle, le méthacrylate de glycidyle, l'acrylate d'hydroxyéthyle, le méthacrylate d'hydroxyéthyle, le méthacrylate d'allyle, l'acrylate de cyclohexyle, le méthacrylate de cyclohexyle, le 2-éthoxyéthyle-acrylate, le 2-éthoxyéthyle-méthacrylate, l'acrylate d'isodécyle, le méthacrylate d'isodécyle, le 2-méthoxyéthyle-acrylate, le 2-éthoxyéthyle-méthacrylate, le 2-(2-éthoxyéthoxy)-éthylacrylate, l'acrylate de 2-phénoxyéthyle, le méthacrylate de 2-phénoxyéthyle, l'acrylate d'isobornyle, le méthacrylate d'isobornyle, l'acrylate de caprolactone, le méthacrylate de caprolactone, l'acrylate de polypropylène glycol, le méthacrylate de polypropylène glycol, l'acrylate de polyéthylène glycol, le méthacrylate de polyéthylène glycol, l'acrylate de benzyle, le méthacrylate de benzyle.

De préférence, l'agent ou les agents d'adhérence utilisable(s) est (ou sont) choisi(s) parmi les copolymères de styrène et d'acide acrylique ou les copolymères de styrène et d'ester d'acide acrylique.

Plus préférentiellement, on utilise une émulsion aqueuse d'un de ces copolymères, éventuellement silanisé. De tels produits sont vendus par exemple sous la dénomination « Acronal® S813 » (copolymère de styrène et d'ester d'acide acrylique, ayant une Tg de 28°C, disponible sous forme de dispersion aqueuse à 49 à 51% en poids d'extrait sec) ou « Acronal® S533 » (copolymère de styrène et d'acide acrylique, ayant une Tg de 5°C, disponible sous forme de dispersion aqueuse à 51 à 53% en poids d'extrait sec) par la société BASF.

L'utilisation de copolymères de styrène et d'acide acrylique silanisé ou les copolymères de styrène et d'ester d'acide acrylique silanisé permet d'obtenir un enduit possédant des propriétés mécaniques (résistance à l'eau par exemple) particulièrement satisfaisantes.

La composition d'enduit selon l'invention comprend de 25 à 50% en poids d'un liant non hydraulique choisi parmi les charges minérales et métalliques suivantes : carbonate d'un métal alcalino-terreux, alumine, silice, silicate d'un métal choisi parmi l'aluminium, les métaux alcalins et les métaux alcalino-terreux, et leur mélange, lesdites charges présentant une taille moyenne de particule allant de 5 à 100 µm. De préférence, la ou les charges minérales ou métalliques sont choisies parmi les charges suivantes : carbonate de calcium, carbonate de magnésium, alumine, silice, silicate d'aluminium, silicate de magnésium, silicate de sodium, silicate de potassium, mica, et leur mélange.

La ou les charges utilisées dans la composition de l'invention peuvent être sous forme hydratée ou anhydre.

Ces particules sont différentes des microsphères creuses de verre ou polymère de conductivité thermique inférieure à 0,1 W.m⁻¹.K⁻¹. En particulier, ces charges ne sont pas creuses.

Ces charges peuvent être de forme diverses, par exemple sphériques.

Parmi les charges utilisables selon l'invention, on utilise de préférence des charges minérales, et plus préférentiellement des charges minérales choisies parmi le carbonate de calcium et la silice.

Selon un mode de réalisation particulier, on utilise de préférence des charges minérales présentant une densité réelle allant de 2,5 à 3 g/cm³.

Ces charges sont disponibles dans le commerce. A titre d'exemple, on peut citer le carbonate de calcium de taille moyenne de particule D50 égale à 22 µm environ, et de densité de charge réelle de 2,7 g/cm³, commercialisé sous la dénomination BEATITE® 30 par la société Onyx et Marbres Granules (OMG), la silice de taille moyenne 35 µm environ, et de densité de charge réelle de 2,65 g/cm³, commercialisée sous la dénomination de Millicil C6 par la société Sifraco.

La composition d'enduit selon l'invention comprend de 0,1 à 1% en poids d'au moins un agent épaississant.

On peut utiliser n'importe quel agent épaississant habituellement utilisé dans les compositions d'enduits de lissage classiques.

La nature et la teneur en agent(s) épaississant(s) utilisable(s) selon l'invention sont convenablement choisies afin d'obtenir les propriétés rhéologiques attendues.

Avantageusement, le ou les agent(s) épaississant(s) peu(ven)t être choisi(s) parmi l'argile, les épaississants polysaccharidiques tels que les épaississants à base d'amidon et amidon modifié, les épaississants cellulosiques, et leurs mélanges, éventuellement en présence de soude. De préférence, on ajoute dans la composition selon l'invention une quantité de soude suffisante pour obtenir un pH basique. Cela permet d'améliorer les propriétés rhéologiques de l'agent épaississant et de ce fait celles de la composition d'enduit.

Parmi les épaississants cellulosiques utilisables, on peut citer la cellulose et ses dérivés alkylé et/ou hydroxyalkylé dont la partie alkyle, identique ou différente, présente de 1 à 4 atomes de carbone, et de préférence de 1 à 3 atomes de carbone. A titre d'exemple, on peut citer la méthyl cellulose, la méthyl hydroxyéthylcellulose, méthylhydroxypropylcellulose.

Ces épaississants sont bien connus de l'homme du métier et tous disponibles commercialement.

Parmi tous ces épaississants, on préfère utiliser un mélange d'épaississants comprenant au moins un agent épaississant possédant en outre des propriétés de rétention d'eau. A titre d'exemple, on peut citer un mélange de « Bentone® EW » correspondant à de l'argile sous forme de poudre vendu par la société ELEMENTIS Specialities, et d' « Addilose® 200 R » correspondant à un agent épaississant et agent de rétention d'eau à base d'amidon modifié, sous forme de poudre.

La composition d'enduit selon l'invention comprend de l'eau. La teneur en eau est ajustée en fonction des autres ingrédients présents dans la composition. De préférence, cette teneur va de 20 à 34% en poids du poids total de la composition.

La composition d'enduit selon l'invention peut comprendre en outre au moins un additif choisi parmi les dispersants de charges, les plastifiants, les biocides et anti-mousses. La composition d'enduit selon l'invention peut comprendre au moins un homopolymère d'acide acrylique agissant comme dispersant de charge. Lorsqu'un ou plusieurs additifs est ou sont présents dans la composition, la teneur totale en additifs ne dépasse pas de préférence 2% et mieux encore ne dépasse pas 1% en poids par rapport au poids total de la composition. De préférence, la composition d'enduit selon l'invention comprend de 0,5 % à 2 % en poids d'additifs.

Selon un mode de réalisation préféré, la composition d'enduit selon l'invention ne comprend pas de liant hydraulique tel que du plâtre, du ciment ou de la bentonite calcique. La présence d'une quantité significative de liant hydraulique dans la composition selon l'invention risque de conduire à une prise en masse rapide de celle-ci au contact de l'eau de la composition.

La composition d'enduit selon l'invention est préparée par simple mélange des différents ingrédients la constituant. Elle peut ensuite être stockée au sec, à l'abri de l'air, dans un conditionnement hermétique pour éviter notamment que l'eau contenue dans la composition d'enduit ne s'évapore. La composition peut ainsi être stockée jusqu'à 18 mois.

Un autre objet de la présente demande concerne un procédé de mise en oeuvre d'une composition d'enduit selon l'invention comprenant les étapes suivantes :
(i) application en une ou plusieurs couches successives de ladite composition sur la surface d'un support à isoler à l'aide d'un rouleau et/ou d'une lisseuse, puis
(ii) séchage de ladite couche, puis
(iii) application éventuelle sur ladite couche d'enduit durcie, d'une couche d'un matériau non isolant, tel qu'une couche de revêtement mural décoratif.

Les étapes (i) puis (ii) peuvent être répétées une ou plusieurs fois avant la mise en oeuvre de l'étape (iii) le cas échéant.

La composition d'enduit selon l'invention peut être appliquée au rouleau sur la surface d'un support à isoler. L'utilisation d'un rouleau permet d'étaler facilement et de manière homogène la composition d'enduit sur toute la surface à isoler. Une fois étalée, la surface de la composition peut ensuite être lissée à l'aide d'une lisseuse.

Le temps écoulé entre chaque application de composition est de préférence inférieur à 30 minutes.

L'étape (i) peut être suivie d'une étape de lissage à l'aide d'une lisseuse lorsque la surface de la composition appliquée à l'issue de l'étape (i) n'est pas ou pas suffisamment lisse. L'étape de lissage peut être réalisée soit en appliquant une nouvelle couche de composition d'enduit à l'aide d'une lisseuse, le lissage se faisant alors simultanément à l'application de la composition, soit en lissant la surface de la composition appliquée issue de l'étape (i) sans superposition d'une nouvelle couche de composition d'enduit, selon le niveau de compétence de l'utilisateur dans le domaine de l'application d'enduit mural.

Ainsi, selon une première variante de l'invention, le procédé de mise en oeuvre d'une composition d'enduit selon l'invention, comprend au moins les étapes suivantes :
(i') application d'une première couche de ladite composition sur une surface d'un support à l'aide d'un rouleau, pour étaler une quantité homogène de la composition, puis
(ii') application d'une deuxième couche de ladite composition sur ladite première couche déposée à l'aide d'une lisseuse, pour lisser la surface de la composition déposée, le temps écoulé entre la première et la deuxième application de composition étant inférieur à 30 minutes, puis
(iii') séchage de la composition d'enduit, puis
(iv') application éventuelle sur ladite couche d'enduit durcie, d'une couche d'un matériau non isolant, tel qu'une couche de revêtement mural décoratif.

Selon cette première variante, les étapes (i'), (ii'), puis (iii') peuvent être répétées une ou plusieurs fois avant la mise en oeuvre de l'étape (iv') le cas échéant. Alternativement, les étapes (ii'), puis (iii') peuvent être répétées une ou plusieurs fois avant la mise en oeuvre de l'étape (iv') le cas échéant.

Selon une deuxième variante de l'invention, le procédé de mise en oeuvre d'une composition d'enduit selon l'invention, comprend au moins les étapes suivantes :
(i") application d'une première couche de ladite composition sur une surface d'un support à l'aide d'un rouleau, pour étaler une quantité homogène de la composition, puis
(ii") lissage de la surface à l'aide d'une lisseuse sans ajout de matière supplémentaire, puis
(iii") séchage de la composition d'enduit, puis
(iv") application éventuelle sur ladite couche d'enduit durcie, d'une couche d'un matériau non isolant, tel qu'une couche de revêtement mural décoratif.

Selon cette deuxième variante, les étapes (i") puis (ii") peuvent être répétées une ou plusieurs fois avant la mise en oeuvre de l'étape (iv") le cas échéant.

Cette variante est particulièrement préférée car elle peut être mise en oeuvre par n'importe quel utilisateur, même peu expérimenté dans le domaine d'application des enduits muraux. En effet, ces étapes de procédé sont particulièrement faciles à mettre en oeuvre et permettent, même à un utilisateur inexpérimenté, de réussir le lissage des murs et plafond. L'utilisation d'un rouleau permet d'étaler rapidement et de manière homogène la composition, pour corriger globalement les défauts de la surface du support. En outre, la composition d'enduit présente un temps de durcissement et de séchage supérieur à 30 minutes, qui laisse à l'utilisateur le temps de corriger les défauts et irrégularités éventuelles laissées à la surface de la première couche d'enduit.

Selon une troisième variante de l'invention, le procédé de mise en oeuvre d'une composition d'enduit selon l'invention, comprend au moins les étapes suivantes :
(i'") application d'une couche de ladite composition sur une surface d'un support, de préférence en un seul passage, à l'aide d'une lisseuse, puis
(ii'") séchage de la composition d'enduit, puis
(iii'") application éventuelle sur ladite couche d'enduit durcie, d'une couche d'un matériau non isolant, tel qu'une couche de revêtement mural décoratif.

Selon cette troisième variante, les étapes (i'") puis (ii"') peuvent être répétées une ou plusieurs fois, avant la mise en oeuvre de l'étape (iii"') le cas échéant.

Ce procédé permet l'application rapide et précise de la composition selon l'invention et représente un gain de temps considérable par rapport à l'utilisation d'une composition de type bi-composant.

Pour chacun des procédés sus-mentionnés, la totalité de la composition appliquée sur toute la surface du support représente un grammage allant de 200 à 1000 g/m². Un tel grammage permet d'obtenir un revêtement d'épaisseur souhaitée telle que décrit plus bas.

Parmi les rouleaux utilisables selon l'invention, on préfère utiliser des rouleaux de mousses texturés en nid d'abeille, par exemple en polyamide ou polyester. Ces rouleaux permettent d'étaler plus facilement la composition d'enduit selon l'invention.

La composition d'enduit selon l'invention durcit lors de l'étape de séchage par évaporation de l'eau contenue dans la composition. En général, le séchage se fait à l'air libre à 20°C. Au bout de 24 heures, l'enduit est complètement sec et dur.

Une fois séchée, le revêtement formé par la composition d'enduit durcie présente avantageusement une épaisseur allant de 0,5 à 5 millimètres, de préférence de 0,5 à 3 mm, et mieux encore de 1 à 2 mm.

La mise en oeuvre des procédés décrits précédemment permet ainsi d'obtenir avantageusement un support revêtu d'une couche d'enduit durcie d'épaisseur allant de 0,5 à 5 millimètres, de préférence de 0,5 à 3 mm, et mieux encore de 1 à 2 mm.

Le support destiné à être recouvert de la composition d'enduit selon l'invention peut être constitué de n'importe quel matériau de construction, neuf ou à restaurer, présentant des défauts pouvant aller jusque 1 cm de profondeur. Il peut s'agir de plâtre, de plaques de plâtre cartonnées, de mortier, de béton, de bois, de briques, de carreaux de faïence, de peintures lessivées et/ou imprimées.

Le matériau non isolant pouvant recouvrir la couche d'enduit peut être de même nature que le support ou de nature différente. Il peut s'agir d'un revêtement mural décoratif, notamment d'un revêtement mural décoratif mince et/ou fragile.

Le revêtement mural décoratif peut être du papier peint, de la tapisserie, de la peinture, du vernis.

Par « non isolant », on entend que le matériau ne possède pas une conductivité thermique inférieure à 0,1 W.m⁻¹.K⁻¹.

Un autre objet de la présente invention porte sur un matériau isolant et notamment un support revêtu d'une couche d'enduit durcie d'épaisseur allant de 0,5 à 5 millimètres, de préférence de 0,5 à 3 mm, et mieux encore de 1 à 2 mm, susceptible d'être obtenue par le procédé tel que défini dans l'un des paragraphes précédents.

La présente demande a également pour objet l'utilisation d'une composition d'enduit selon l'invention comme enduit de lissage et isolant thermique pour mur et plafond. Ces propriétés combinées permettent d'isoler et restaurer aisément et en même temps des murs et plafond anciens.

En particulier, la composition d'enduit selon l'invention est utile pour former un revêtement mural intérieur isolant thermique, possédant une conductivité thermique inférieure à 0,07 W.m⁻¹.K⁻¹, et mieux encore inférieure à 0,065 W.m⁻¹.K⁻¹.

Les exemples suivants sont donnés à titre purement illustratif de l'invention et ne sauraient être interprétés pour en limiter la portée.

### Exemples de l'invention :

Les compositions d'enduit 1 à 5 selon l'invention sont réalisées en mélangeant les différents ingrédients indiqués dans le tableau 1. Sauf indication contraire, les teneurs indiquées dans ce tableau sont exprimées en % en poids d'ingrédients sec par rapport au poids total de la composition.

**Tableau 1**

| | **Compositions** | **1** | **2** | **3** | **4** | **5** |
|---|---|---|---|---|---|---|
| a) | Microsphères creuses en verre (Scotchlite® S22, 0,076 W.W⁻¹.K⁻¹) | 14,3 | - | - | - | - |
| | Microsphères creuses en verre (Scotchlite® K1, 0,047 W.m⁻¹.K⁻¹) | - | 15 | 7,5 | 10,0 | 12,0 |
| b) | Alcool gras linéaire en C₈-C₃₀ (Loxanol®842 DP/3) | 0,1 | 0,1 | 0,1 | 0,1 | 0,1 |
| | Alcool polyvinylique (Solvitose®17S) | 0,4 | 0,4 | 0,4 | 0,4 | 0,4 |
| c) | Copolymère de (styrène-acrylate de butyle), Tg = 10°C | 14,7 | 12,7 | 12,7 | 12,7 | 12,3 |
| d) | Carbonate de calcium (Beatite®30) | 34,7 | 36,4 | 43,9 | 41,4 | 29,1 |
| e) | Epaississant argile (Bentone®EW) | 0,2 | 0,3 | 0,3 | 0,3 | 0,3 |
| | Epaississant polysaccharidique (Addilose 200R®) | 0,3 | 0,3 | 0,3 | 0,3 | 0,3 |
| | Lessive de soude | q.s.p pH > 7 | q.s.p pH > 7 | q.s.p pH > 7 | q.s.p pH > 7 | q.s.p pH > 7 |
| | Additifs | 0,9* | 0,9* | 0,9* | 0,9* | 0,9* |
| f) | Eau | q.s.p 100 | q.s.p 100 | q.s.p 100 | q.s.p 100 | q.s.p 100 |

| | | | | | | |
|---|---|---|---|---|---|---|
| q.s.p signifie « quantité suffisante pour atteindre » * : quantité exprimée en % en poids humide par rapport au poids total de la composition | | | | | | |

Ces compositions peuvent être conservées jusque 18 mois au sec, dans un étui hermétique à l'air et l'humidité.

Ces compositions ont été appliquées aisément et de manière homogène sur divers supports (mur, plafond) au rouleau puis à la lisseuse, en une couche d'épaisseur variant de 0,5 à 3 mm. Une fois durcie la couche de revêtement présente une surface lisse sans défaut.

### Mesure de conductivité thermique

On mesure pour chacun des exemples 1 à 5, la conductivité thermique de la composition une fois séchée pour une épaisseur donnée, à 23°C à une humidité relative de 50%. La mesure est réalisée à l'aide d'une sonde de mesure reliée à un conductivimètre thermique NEOTIM FP2C. Pour cela, on applique dans deux moules de forme parallélépipédique en Téflon de longueur, largeur et épaisseur données, la composition à tester de manière à la mettre sous forme d'éprouvette de 50 mm de long, 70 mm de large et d'épaisseur donnée indiquée dans le tableau 2. Après séchage complet de l'éprouvette, et démoulage, on place ensuite la sonde de mesure entre les 2 éprouvettes de la composition. Puis, on presse légèrement les deux plaques de la composition l'une contre l'autre de manière à ce que la sonde de mesure se retrouve prise en sandwich entre ces deux plaques.

Les résultats des mesures de conductivité thermique sont exprimés en watt par mètre par kelvin et sont indiqués dans le tableau 2.

**Tableau 2**

| **Caractérisation** | **1** | **2** | **3** | **4** | **5** |
|---|---|---|---|---|---|
| Epaisseur (mm) | 0,9 | 2,1 | 1,3 | 1,9 | 1,9 |
| Conductivité thermique (W/(m.K)) | 0,066 | 0,050 | 0,068 | 0,058 | 0,049 |

Tous les échantillons testés selon l'invention, présentent une conductivité thermique inférieure à 0,07 W.m⁻¹.K⁻¹.

## Revendications

1. Composition d'enduit comprenant :
- de 4 à 17% en poids de microsphères creuses ayant une conductivité thermique (notée lambda) inférieure à 0,1 W.m⁻¹.K⁻¹,
- de 0,05 à 1% en poids d'au moins un alcool linéaire dont la chaine hydrocarbonée comporte au moins 8 atomes de carbone,
- de 5 à 25% en poids d'au moins un agent d'adhérence choisi parmi les polymères dispersibles ou solubles dans l'eau, présentant une température de transition vitreuse (Tg) inférieure ou égale à 65°C,
- de 25 à 50% en poids d'un liant non hydraulique choisi parmi les charges minérales et métalliques suivantes : carbonate d'un métal alcalino-terreux, alumine, silice, silicate d'un métal choisi parmi l'aluminium, les métaux alcalins et les métaux alcalino-terreux, et leur mélange, lesdites charges présentant une taille moyenne de particule allant de 5 à 100 µm,
- de 0,1 à 1 % en poids d'au moins un agent épaississant,
- de l'eau,
les pourcentages en poids étant exprimés en % en poids de matière sèche par rapport au poids total de la composition d'enduit.

2. Composition d'enduit selon la revendication 1, **caractérisée en ce que** les microsphères creuses ont une densité réelle allant de 0,05 à 0,5 g/cm³.

3. Composition d'enduit selon l'une des revendications 1 à 2, **caractérisée en ce que** les microsphères creuses sont des microsphères creuses ayant une taille moyenne de particule (D50) allant de 0,10 à 100 µm.

4. Composition d'enduit selon l'une des revendications 1 à 3, **caractérisée en ce que** les microsphères creuses sont des microsphères creuses de verre ou de polymère choisies parmi celles en borosilicate de sodium et de calcium, celles en aluminosilicate, et celles en chlorure de vinylidène/acrylonitrile.

5. Composition d'enduit selon l'une des revendications 1 à 4, **caractérisée en ce que** l'alcool est un mélange d'alcool(s) gras linéaire(s) de formule ROH, où R est une chaine hydrocarbonée linéaire, saturée ou insaturée, ayant de 8 à 30 atomes de carbone et de polyalcool(s) vinylique(s), ayant une Tg allant de 75 à 95°C.

6. Composition d'enduit selon l'une des revendications 1 à 5, **caractérisée en ce que** le polymère dispersible ou soluble dans l'eau est choisi parmi les copolymères de styrène et d'acide (méth)acrylique, les copolymères de styrène et d'ester d'acide (méth)acrylique, les copolymères de styrène et de (méth)acrylamide, lesdits copolymères pouvant être silanisés, les homopolymères et copolymères du butadiène tel que le polybutadiène et polybutadiène-styrène, les polymères vinyliques tel que polychlorure de vinyl et polyvinylacétate, les polyuréthanes, et leur mélange.

7. Composition d'enduit selon l'une des revendications 1 à 6, **caractérisée** en que la charge minérale est choisie parmi le carbonate de calcium et la silice.

8. Composition d'enduit selon l'une des revendications 1 à 7, **caractérisée** en que l'agent épaississant est choisi parmi l'argile, les épaississants polysaccharidiques et leur mélange, éventuellement en présence de soude.

9. Procédé de mise en oeuvre d'une composition telle que définie dans l'une quelconque des revendications 1 à 8, comprenant au moins les étapes suivantes :
(i) application en une ou plusieurs couches successives de ladite composition sur une surface d'un support à l'aide d'un rouleau et/ou d'une lisseuse, puis
(ii) séchage de ladite couche, puis
(iii) application éventuelle sur ladite couche d'enduit durcie, d'une couche d'un matériau non isolant.

10. Procédé selon la revendication 9, **caractérisé en ce qu'**il comprend au moins les étapes suivantes :
(i') application d'une première couche d'une composition telle que définie dans l'une quelconque des revendications 1 à 8 sur une surface d'un support à l'aide d'un rouleau, puis
(ii') application d'une deuxième couche d'une composition telle que définie dans l'une quelconque des revendications 1 à 8 sur ladite première couche déposée à l'aide d'une lisseuse, le temps écoulé entre la première et la deuxième application de composition étant inférieur à 30 minutes, ou
(ii") lissage de la surface à l'aide d'une lisseuse sans ajout de matière supplémentaire, puis
(iii') séchage de la composition d'enduit, puis
(iv') application éventuelle sur ladite couche d'enduit durcie, d'une couche d'un matériau non isolant.

11. Procédé selon la revendication 9, **caractérisé en ce qu'**il comprend au moins les étapes suivantes :
(i'") application d'une couche d'une composition telle que définie dans l'une quelconque des revendications 1 à 8 sur une surface d'un support, à l'aide d'une lisseuse, puis
(ii"') séchage de la composition d'enduit, puis
(iii"') application éventuelle sur ladite couche d'enduit durcie, d'une couche d'un matériau non isolant.

12. Procédé selon la revendication 9 ou 10, caractérisé en ce le rouleau utilisé à l'étape (i) ou (i') est choisi parmi les rouleaux de mousses texturés en nid d'abeille.

13. Support revêtu d'une couche de composition d'enduit durcie d'épaisseur allant de 0,5 à 3 millimètres susceptible d'être obtenu par le procédé tel que défini à l'une quelconque des revendications 9 à 12.

14. Utilisation d'une composition telle que définie dans l'une quelconque des revendications 1 à 8 comme enduit de lissage et/ou isolant thermique pour mur et plafond.

## Patentansprüche

1. Putzzusammensetzung, umfassend:
- von 4 bis 17 Gew.-% hohle Mikrosphären mit einer Wärmeleitfähigkeit (als Lambda bezeichnet) von weniger als 0, 1 W.m⁻¹.K⁻¹,
- von 0,05 bis 1 Gew.-% mindestens eines linearen Alkohols, dessen Kohlenwasserstoffkette mindestens 8 Kohlenstoffatome umfasst,
- von 5 bis 25 Gew.-% mindestens eines Haftmittels, ausgewählt aus in Wasser dispergierbaren oder löslichen Polymeren, mit einer Glasübergangstemperatur (Tg) von kleiner oder gleich 65°C,
- von 25 bis 50 Gew.-% eines nichthydraulischen Bindemittels, ausgewählt als den folgenden mineralischen und metallischen Chargen: Erdalkalimetallcarbonat, Aluminiumoxid, Siliciumdioxid, Silikat eines Metalls, ausgewählt aus Aluminium, Alkalimetallen und Erdalkalimetallen, und ihrer Mischung, wobei die Chargen eine mittlere Partikelgröße von 5 bis 100 µm aufweisen,
- von 0,1 bis 1 Gew.-% mindestens eines Verdickungsmittels,
- Wasser,
wobei die Gewichtsprozentsätze in Gew.-% des Trockenmaterials in Bezug auf das Gesamtgewicht der Putzzusammensetzung ausgedrückt sind.

2. Putzzusammensetzung nach Anspruch 1, **dadurch gekennzeichnet, dass** die hohlen Mikrosphären eine reale Dichte von 0,05 bis 0,5 g/cm³ aufweisen.

3. Putzzusammensetzung nach einem der Ansprüche 1 bis 2, **dadurch gekennzeichnet, dass** die hohlen Mikrosphären hohle Mikrosphären mit einer mittleren Partikelgröße (D50) von 0,10 bis 100 µm sind.

4. Putzzusammensetzung nach einem der Ansprüche 1 bis 3, **dadurch gekennzeichnet, dass** die hohlen Mikrosphären hohle Mikrosphären aus Glas oder aus Polymer sind, ausgewählt aus jenen aus Natrium- und Calciumborsilikat, jenen aus Aluminosilikat und jenen aus Vinylidenchlorid/Acrylonitril.

5. Putzzusammensetzung nach einem der Ansprüche 1 bis 4, **dadurch gekennzeichnet, dass** der Alkohol eine Mischung ist von einem linearen Fettalkohol(en) mit der Formel ROH, wobei R eine lineare Kohlenwasserstoffkette ist, gesättigt oder ungesättigt, mit 8 bis 30 Kohlenstoffatomen, und Vinylpolyalkohol(en) mit einer Tg von 75 bis 95°C.

6. Putzzusammensetzung nach einem der Ansprüche 1 bis 5, **dadurch gekennzeichnet, dass** das in Wasser dispergierbare oder lösliche Polymer ausgewählt ist aus Copolymeren von Styrol und (Meth)Acrylsäure, Copolymeren von Styrol und (Meth)Acrylsäureester, Copolymeren von Styrol und (Meth)Acrylamid, wobei die Copolymere silanisiert sein können, Homopolymeren und Copolymeren von Butadien, wie Polybutadien und Polybutadien-Styrol, Vinylpolymeren, wie Vinylpolychlorid und Polyvinylacetat, Polyurethanen und ihrer Mischung.

7. Putzzusammensetzung nach einem der Ansprüche 1 bis 6, **dadurch gekennzeichnet, dass** die mineralische Charge aus Calciumcarbonat und Siliciumdioxid ausgewählt ist.

8. Putzzusammensetzung nach einem der Ansprüche 1 bis 7, **dadurch gekennzeichnet, dass** das Verdickungsmittel aus Ton, Polysaccharid-Verdickungsmitteln und ihrer Mischung, gegebenenfalls in Anwesenheit von Natriumcarbonat, ausgewählt ist.

9. Verfahren zur Herstellung einer Zusammensetzung, wie in einem der Ansprüche 1 bis 8 definiert, umfassend mindestens die folgenden Schritte:
(i) Aufbringen der Zusammensetzung auf einer Fläche eines Trägers mit Hilfe einer Walze und/oder eines Glätters in einer oder mehreren aufeinanderfolgenden Schichten, dann
(ii) Trocknen der Schicht, dann
(iii) optionales Aufbringen einer Schicht aus einem nicht-isolierenden Material auf der gehärteten Putzschicht.

10. Verfahren nach Anspruch 9, **dadurch gekennzeichnet, dass** dieses mindestens die folgenden Schritte umfasst:
(i') Aufbringen einer ersten Schicht einer Zusammensetzung, wie in einem der Ansprüche 1 bis 8 definiert, auf einer Fläche eines Trägers mit Hilfe einer Walze, dann
(ii') Aufbringen einer zweiten Schicht einer Zusammensetzung, wie in einem der Ansprüche 1 bis 8 definiert, auf der ersten aufgebrachten Schicht mit Hilfe eines Glätters, wobei die Zeit, die zwischen dem ersten und dem zweiten Aufbringen der Zusammensetzung verstreicht, weniger als 30 Minuten beträgt, oder
(ii'') Glätten der Oberfläche mit Hilfe eines Glätters ohne Zusatz von ergänzendem Material, dann
(iii') Trocken der Putzzusammensetzung, dann
(iv') optionales Aufbringen einer Schicht aus einem nicht-isolierenden Material auf der gehärteten Putzschicht.

11. Verfahren nach Anspruch 9, **dadurch gekennzeichnet, dass** dieses mindestens die folgenden Schritte umfasst:
(i"') Aufbringen einer Schicht einer Zusammensetzung, wie in einem der Ansprüche 1 bis 8 definiert, auf einer Fläche eines Trägers mit Hilfe eines Glätters, dann
(ii"') Trocken der Putzzusammensetzung, dann
(iii"') optionales Aufbringen einer Schicht aus einem nicht-isolierenden Material auf der gehärteten Putzschicht.

12. Verfahren nach Anspruch 9 oder 10, **dadurch gekennzeichnet, dass** Walze, die in Schritt (i) oder (i') verwendet wird, aus wabenförmig texturierten Schaumstoffwalzen ausgewählt wird.

13. Träger, welcher mit einer Schicht einer gehärteten Putzzusammensetzung mit einer Dicke von 0,5 bis 3 Millimeter beschichtet ist, die durch das Verfahren, wie in einem der Ansprüche 9 bis 12 definiert, erhalten werden kann.

14. Verwendung einer Zusammensetzung, wie in einem der Ansprüche 1 bis 8 definiert, als glättender und/oder wärmedämmender Mauer- und Deckenputz.

## Claims

1. Coating composition comprising:
- from 4 to 17 wt% of hollow microspheres having a thermal conductivity (designated lambda) below 0.1 W.m⁻¹.K⁻¹,
- from 0.05 to 1 wt% of at least one linear alcohol whose hydrocarbon chain comprises at least 8 carbon atoms,
- from 5 to 25 wt% of at least one bonding agent selected from water-dispersible or water-soluble polymers having a glass transition temperature (Tg) less than or equal to 65°C,
- from 25 to 50 wt% of a non-hydraulic binder selected from the following mineral and metallic fillers: carbonate of an alkaline-earth metal, alumina, silica, silicate of a metal selected from aluminium, the alkali metals and the alkaline-earth metals, and mixture thereof, said fillers having an average particle size in the range from 5 to 100 µm,
- from 0.1 to 1 wt% of at least one thickener,
- water,
the percentages by weight being expressed in wt% of dry matter relative to the total weight of the coating composition.

2. Coating composition according to Claim 1, **characterized in that** the hollow microspheres have a real density in the range from 0.05 to 0.5 g/cm³.

3. Coating composition according to either of Claims 1 and 2, **characterized in that** the hollow microspheres are hollow microspheres having an average particle size (D50) in the range from 0.10 to 100 µm.

4. Coating composition according to one of Claims 1 to 3, **characterized in that** the hollow microspheres are hollow glass or polymer microspheres selected from those of sodium and calcium borosilicate, those of aluminosilicate, and those of vinylidene chloride/acrylonitrile.

5. Coating composition according to one of Claims 1 to 4, **characterized in that** the alcohol is a mixture of linear fatty alcohol (s) of formula ROH, where R is a linear hydrocarbon chain, saturated or unsaturated, having from 8 to 30 carbon atoms and of vinyl polyol(s), having a Tg in the range from 75 to 95°C.

6. Coating composition according to one of Claims 1 to 5, **characterized in that** the water-dispersible or water-soluble polymer is selected from the copolymers of styrene and (meth)acrylic acid, the copolymers of styrene and ester of (meth)acrylic acid, the copolymers of styrene and (meth)acrylamide, and said copolymers may be silanized, the homopolymers and copolymers of butadiene such as polybutadiene and polybutadiene-styrene, the vinyl polymers such as polyvinyl chloride and polyvinyl acetate, the polyurethanes, and mixture thereof.

7. Coating composition according to one of Claims 1 to 6, **characterized in that** the mineral filler is selected from calcium carbonate and silica.

8. Coating composition according to one of Claims 1 to 7, **characterized in that** the thickener is selected from clay, polysaccharide thickeners and mixture thereof, optionally in the presence of soda.

9. Method of applying a composition as defined in any one of Claims 1 to 8, comprising at least the following steps:
(i) application of said composition in one or more successive layers on a surface of a substrate using a roller and/or a smoothing tool, then
(ii) drying said layer, then
(iii) optional application, on said hardened coating layer, of a layer of a non-insulating material.

10. Method according to Claim 9, **characterized in that** it comprises at least the following steps:
(i') application of a first layer of a composition as defined in any one of Claims 1 to 8 on a surface of a substrate using a roller, then
(ii') application of a second layer of a composition as defined in any one of Claims 1 to 8 on said first layer deposited using a smoothing tool, the time that passes between the first and second application of the composition being less than 30 minutes, or
(ii'') smoothing of the surface using a smoothing tool without adding additional material, then
(iii') drying the coating composition, then
(iv') optional application, on said hardened coating layer, of a layer of a non-insulating material.

11. Method according to Claim 9, **characterized in that** it comprises at least the following steps:
(i"') application of a layer of a composition as defined in any one of Claims 1 to 8 on a surface of a substrate, using a smoothing tool, then
(ii"') drying the coating composition, then
(iii"') optional application, on said hardened coating layer, of a layer of a non-insulating material.

12. Method according to Claim 9 or 10, **characterized in that** the roller used in step (i) or (i') is selected from honeycomb textured foam rollers.

13. Substrate covered with a hardened layer of coating composition of thickness in the range from 0.5 to 3 millimetres obtainable by the method as defined in any one of Claims 9 to 12.

14. Use of a composition as defined in any one of Claims 1 to 8 as smoothing and/or heat-insulating coating for walls and ceilings.
